(19) Europäisches Patentamt
European Patent Office
Office européen des brevets

(11) Veröffentlichungsnummer: **0 026 365**
**B1**

(12) # EUROPÄISCHE PATENTSCHRIFT

(45) Veröffentlichungstag der Patentschrift: **05.05.82**

(51) Int. Cl.³: **A 01 N 3/02**

(21) Anmeldenummer: **80105386.9**

(22) Anmeldetag: **09.09.80**

(54) **Mittel zum Frischhalten von Schnittblumen, Verfahren zu ihrer Herstellung, sowie deren Verwendung.**

(30) Priorität: **22.09.79 DE 2938414**

(43) Veröffentlichungstag der Anmeldung: **08.04.81 Patentblatt 81/14**

(45) Bekanntmachung des Hinweises auf die Patenterteilung: **05.05.82 Patentblatt 82/18**

(84) Benannte Vertragsstaaten: **BE CH DE FR GB IT LI NL**

(56) Entgegenhaltungen: **DE-A-2 654 349**

(73) Patentinhaber: **BAYER AG, Zentralbereich Patente, Marken und Lizenzen, D-5090 Leverkusen 1, Bayerwerk (DE)**

(72) Erfinder: **Niggemann, Johannes, Dr., Christian-Hess-Strasse 7, D-5090 Leverkusen 1 (DE)**
Erfinder: **Kühle, Engelbert, Dr., von Bodelschwingh-Strasse 42, D-5060 Bergisch-Gladbach 2 (DE)**
Erfinder: **Klauke, Erich, Dr., Eichendorffweg 8, D-5068 Odenthal (DE)**

**EP 0 026 365 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

# Mittel zum Frischhalten von Schnittblumen, Verfahren zu ihrer Herstellung, sowie deren Verwendung

Die vorliegende Erfindung betrifft die Verwendung von bekannten N-(Trifluormethyl)-N-(dichlorfluormethylsulfenyl)-aminobenzoesäuren und deren Salzen zum Frischhalten von Schnittblumen und anderen abgeschnittenen Pflanzenteilen.

Es ist bereits bekannt, dass man die Haltbarkeit von Schnittblumen dadurch erhöhen kann, dass man dem Wasser, in dem die Blumen stehen, Frischhaltemittel zusetzt [vgl. z.B. H. Römpp, «Chemie-Lexikon», Franckh'sche Verlagsbuchhandlung Stuttgart (1966), S. 733; J.F.T. Aarts, «Over de houdbaarheid van snijbloemen», Meded. Landbouwhogeschool Wageningen/Nederland 57, 1-62 (1957)]. Die Konservierungswirkung der beschriebenen Mittel ist jedoch nicht immer befriedigend. Dieses trifft auch für solche Mittel zu, die aus einem Gemisch von Zucker bzw. Zuckerderivaten, einem pH-Stabilisator, einer organischen Carbonsäure mit niedrigem Molekulargewicht und einem Mikrobizid (vgl. hierzu DT-OS 1 542 832) oder Hydrazinsulfat und Gibberellinsäure (vgl. CH-PS 432 115) bestehen. Die Wirksamkeit mancher Komponenten von Frischhaltemitteln hält nicht lange vor. Auch bestehen beträchtliche Unterschiede ja nach der Art der verwendeten Schnittblumen.

Weiterhin ist bekannt , dass N-(Trifluormethyl)-N-(dichlorfluormethylsulfenyl)-aminobenzoesäure-phenylcarbonsäureester zum Frischhalten von Schnittblumen verwendet werden können (vgl. DE-OS 2 654 349). Diese Verbindungen befriedigen nicht immer bei niedriger Aufwandmenge und verursachen bei höherer Anwendungskonzentration mitunter Blattschäden.

Aufgabe der vorliegenden Erfindung war es, ein Schnittblumbenfrischhaltemittel zu entwikkeln, welches einen guten Konservierungseffekt entfaltet und darüber hinaus eine Frischhaltung bei möglichst vielen Blumenarten ermöglicht. Hierbei war zu berücksichtigen, dass – wie eigene Untersuchungen ergeben haben – nur ganz bestimmte Kombinationen von wirksamen Bestandteilen in Schnittblumenfrischhaltemitteln diese Forderung zu erfüllen vermögen, da Wechselwirkungen zwischen der mikrobizid wirksamen Komponente und den übrigen Bestandteilen des Frischhaltemittels bestehen.

Es wurde nun gefunden, dass die bekannten N-(Trifluormethyl)-N-(dichlorfluormethylsulfenyl)-aminobenzoesäuren und deren Salze der allgemeinen Formel

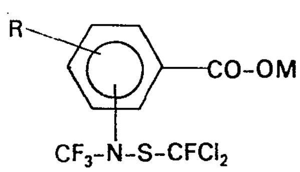

(I)

in welcher

M für Wasserstoff oder 1 Äquivalent eines Alkali- oder Erdalkalimetallatomes steht,

und

R für Wasserstoff, Methyl, Methoxy, Trifluormethyl, Chlor oder Nitro steht,

bei Schnittblumen und abgeschnittenen Pflanzenteilen konservierende Eigenschaften aufweisen.

Überaschenderweise zeigen die erfindungsgemäss verwendbaren Verbindungen der Formel I, die als mikrobizide Komponente neben anderen üblichen Stoffen, wie z.B. Zuckerderivaten, Bor- und Aluminiumsalzen, im Frischhaltemittel enthalten sind, gegenüber bekannten Konservierungsmitteln eine Reihe von Vorteilen: So wird die Haltbarkeit der Schnittblumen erheblich erhöht. Die Verbindungen der Formel I besitzen ein breites Wirkungsspektrum im Hinblick auf die verschiedenen im Handel erhältlichen Blumenarten bei guter Verträglichkeit; es werden keine Blatt- und Blütenschädigungen verursacht. Das Wasser, in dem die Blumen stehen, bleibt frei von Mikroben. Die Kombiantionen, die die erfindungsgemäss verwendbaren Verbindungen enthalten, besitzen eine hervorragende Lagerstabilität. Die die erfindungsgemäss verwendbaren Stoffe der Formel I enthaltenden Schnittblumenfrischhaltemittel kommen infolge ihrer guten Wirkung einem Universalpräparat nahe und vermögen Spezialpräparate (z.B. für Nelken) zu ersetzen. Die erfindungsgemässe Verwendung der Verbindungen der Formel I ist daher für Gartenbaubetriebe, Blumenhandel und Privathaushalte von Interesse und stellt einen technischen Fortschritt dar.

Die erfindungsgemäss verwendbaren N-(Trifluormethyl)-N-(dichlorfluormethylsulfenyl)-aminobenzoesäuren sind durch die Formel I definiert. Von besonderem Interesse ist die Verwendung der folgenden Wirkstoffe:

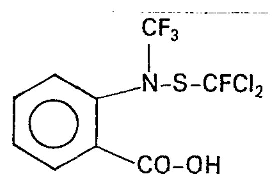

(1)

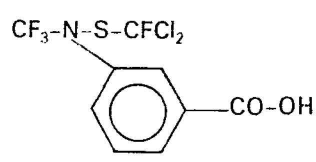

(2)

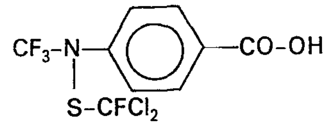

(3)

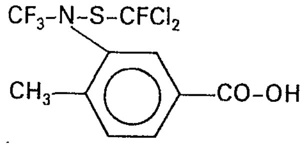

(4)

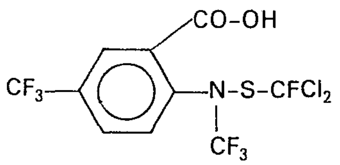

(5)

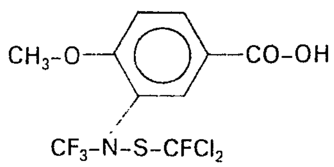

(6)

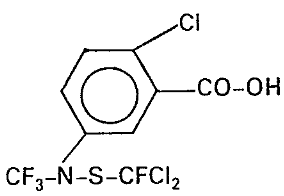

(7)

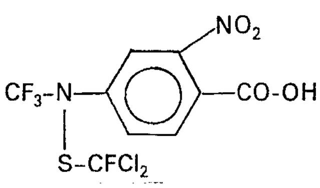

(8)

Die Verbindungen und deren Herstellung aus Fluorcarbonyl-N-(trifluormethylsulfenyl)-anilinen und Ameisensäuren im Temperaturbereich zwischen 50 und 100°C sind bekannt (vgl. die DE-OS 1 810 580 bzw. die entsprechende GB-PS 1 229 083).

Wie schon einleitend festgestellt, können die erfindungsgemäss verwendbaren Wirkstoffe zur Konservierung von Schnittblumen und anderen abgeschnittenen Pflanzenteilen Verwendung finden. Sie sind besonders wirksam gegen schleimbildende Bakterien und solche pathogenen Pilzarten, die im Blumenvasen-Wasser häufig zu finden sind.

Die erfindungsgemäss verwendbaren Wirkstoffe können in für Frischhaltemittel übliche Formulierungen übergeführt werden. Diese Formulierungen enthalten bevorzugt Kohlenhydrate, wie z.B. Zucker oder Zuckerderivate, Magnesium-, Bor- oder Aluminiumsalze. Bei den Formulierungen ist zu unterscheiden zwischen Flüssigformulierungen und Trockenkonzentraten. Die Flüssigformulierungen enthalten Wasser und wasserlösliche organische Lösungsmittel (z.B. Alkohole, Glykole, Glyzerin) als Trägerstoffe bzw. Verdünnungsmittel. Die Trockenkonzentrate, die eine insbesondere für den Transport in ferne Länder geeignete Formulierungsform darstellen, enthalten als Trägerstoffe bevorzugt Kieselgur, oder Silikate, Tonerden oder Gesteinsmehle natürlicher oder synthetischer Art. Die Formulierungen werden in bekannter Weise hergestellt, z.B. durch Vermischen der Wirkstoffe mit Streckmitteln, also flüssigen Lösungs- oder Verdünnungsmitteln oder festen Trägerstoffen.

Die Konzentrationen der Wirkstoffe in der Formulierung liegt bei Flüssigformulierungen zwischen 0,005 und 1 Gew.-%, vorzugsweise zwischen 0,02 und 0,5%. Bei Trockenkonzentraten liegt die Wirkstoffkonzentration zwischen 0,05 und 20 Gewichtsprozent, vorzugsweise zwischen 0,1 und 10 Gew.-%.

Die erfindungsgemässen Wirkstoffe werden bevorzugt in Form ihrer Formulierungen sowie der daraus bereiteten Anwendungsformen angewandt. Die Konzentration der Wirkstoffe in dem Wasser, in dem die Schnittblumen stehen, liegt zwischen 0,0005 und 0,5 Gewichtsprozent, vorzugsweise 0,001 und 0,2%.

Die nachfolgenden Verwendungsbeispiele erläutern das Verfahren:

Beispiel 1

Vergleich der Frischhaltewirksamkeit verschiedener erfindungsgemässer Mikrobizide im Schnittblumenfrischhaltemittel.

Versuchsdurchführung:

Das Schnittblumenfrischhaltemittel wird in der angegebenen Konzentration dem Leitungswasser zugegeben. Die erhaltene Konservierungslösung wird in gleichen Volumina in gleichgestaltete Gefässe gefüllt. In diese werden frisch geschnittene Schnittblumen gleichen Entwicklungsstands eingestellt. Jede Variante mit 10 Schnittblumen einer Art und Sorte wurden viermal wiederholt aufgestellt. Der Flüssigkeitsstand in den Gefässen wurde durch Nachfüllen der entsprechenden Frischhaltelösungen weitgehend konstant gehalten.

Versuchsauswertung:

In zeitlichen Abständen erfolgte eine Bonitierung hinsichtlich der Haltbarkeit der Blüten nach dem Masstab:

Ansehnliche Blüten / Blüten im Verwelken / Verwelkte Blüten

Nach einem Auswertungsverfahren von J. Münch und J. Leinfelder (Die Verlängerung der Haltbarkeit von Schnittblumen, Jahresbericht 1966/67 der Staatl. Lehr- und Forschungsanstalt für Gartenbau, Weihenstephan, Seite 92) wurden folgende Beurteilungskriterien errechnet:

a) Die «gemittelte Haltbarkeit in Tagen» wurde aus der Zahl der Tage, an denen die Blumen ansehnlich waren, errechnet. Dabei wurde die Gesamtsumme der Tage durch die Zahl der Blumen je Versuchsglied (Variante) geteilt:

b) Bei dem «Vergleichswert» (gemittelte Haltbarkeit in Prozent) wurden die letztgenannten Werte mit dem Kontrollglied (Blumen in Schnittblumenfrischhaltemittel des Handels = 100) in Relation gesetzt.

Basiszusammensetzung des Blumenfrischhaltemittels (= «Basis-BFH») ohne Mikrobizid:

15 g Traubenzucker
5 g Saccharose
50 mg Borax ($Na_2B_4O_7 \cdot 10H_2O$)
450 mg Kaliumaluminiumsulfat, Alaun ($KAl(SO_4)_2 \cdot 12H_2O$)
250 mg Ammoniumaluminiumsulfat ($NH_4Al(SO_4)_2$)

Die nachfolgende Tabelle zeigt die Versuchsergebnisse auf:

Tabelle 1: Schnittblumenart: Moosrosen, Sorte «Marimba»

| Mikrobizid (Wirkstoff) im Basis-BFH | Dosis in mg/l Vasenwasser | Gemittelte Haltbarkeit in Tagen | Vergleichswert | Bemerkungen |
|---|---|---|---|---|
| Nur Leitungswasser | – | 11,5 | – | Lösung sehr trüb durch Mikroorganismen |
| 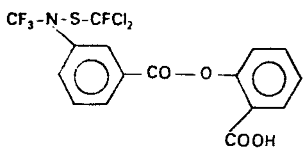<br>(bekannt) | 25 | 12,8 | 100 | Lösung braun |
| (2)<br>(erfindungsgemäss) | 5<br>15<br>20 | 15,5<br>15,5<br>14,8 | 121<br>121<br>116 | Lösung klar,<br>Sehr gesundes<br>Laub |
| (3)<br>(erfindungsgemäss) | 5<br>15<br>20 | 15,5<br>15,5<br>14,8 | 121<br>121<br>113 | Lösung klar,<br>sehr gesundes<br>Laub |

Beispiel 2

Vergleiche mit Schnittblumenfrischhaltemittel des Handels.

Zur Versuchdurchführung, Versuchsauswertung und zur Zusammensetzung siehe Beispiel 1.

Die Ergebnisse gehen aus der nachfolgenden Tabelle hervor:

Tabelle 2: Schnittblumenart: Garbera, Sorte «Lila Wunder»

| Mikrobizid (Wirkstoff) im Basis-BFH | Dosis in mg/l Vasenwasser | Gemittelte Haltbarkeit in Tagen | Vergleichswert |
|---|---|---|---|
| Nur Leitungswasser | – | 8,0 | – |
| «Substral-Blumenfrisch» (R)<br>(bekannt)* | [25 ml]** | 8,5 | 100 |
| (3)<br>erfindungsgemäss | 2,5<br>3,75<br>5,0 | 13,2<br>12,7<br>11,5 | 155<br>149<br>135 |

* Produkt der Firma Barnängen-Deutschland GmbH, D-5020 Frechen
** Angabe der benötigten ml der handelsüblichen Flüssigformulierung pro l Vasenwasser

Beispiel 3

Vergleich mit Schnittblumenfrischhaltemittel des Handels.

Zur Versuchdurchführung, Versuchsanordnung und zur Zusammensetzung siehe Beispiel 1.

Die Ergebnisse gehen aus der nachfolgenden Tabelle hervor:

Tabelle 3: Schnittblumenart: Moosrose, Sorte «Garnette»

| Mikrobizid (Wirkstoff) im Basis-BFH | Dosis in mg/l Vasenwasser | Gemittelte Haltbarkeit in Tagen | Vergleichswert | Bemerkungen |
|---|---|---|---|---|
| Nur Leitungswasser | – | 11,5 | – | Lösung sehr trüb durch Mikroorganismen |
| (R) «Substral-Blumenfrisch» (bekannt)* | [25 ml]* | 11 | 100 | Lösung trüb |
| (3) (erfindungsgemäss) | 2,5 | 13,9 | 126 | Lösung etwas trüb |
| | 3,75 | 14,6 | 133 | Lösung etwas trüb |
| | 5,0 | 14,1 | 128 | Lösung klar |

* Siehe Angabe unter Tabelle 2

Beispiel 4

Vergleich mit Schnittblumenfrischhaltemittel des Handels.

Zur Versuchdurchführung, Versuchsanordnung und zur Zusammensetzung siehe Beispiel 1.

Die Ergebnisse gehen aus der nachfolgenden Tabelle hervor:

Tabelle 4: Schnittblumenart: Edelnelke, Sorte «Nora»

| Mikrobizid (Wirkstoff) im Basis-BFH | Dosis in mg/l Vasenwasser V | Gemittelte Haltbarkeit in Tagen | Vergleichswert | Bemerkungen |
|---|---|---|---|---|
| Nur Leitungswasser | – | 8,0 | – | Lösung sehr trüb durch Mikroorganismen |
| (R) «Chrysal» (bekannt)* | [12,5 g]** | 8,5 | 100 | Lösung etwas trüb |
| (3) (erfindungsgemäss) | 2,5 | 13,0 | 153 | Lösung etwas trüb |
| | 3,75 | 12,2 | 144 | Lösung etwas trüb |
| | 5,0 | 13,3 | 157 | Lösung klar |

* Hersteller Firma Bendien, Naarden/Holland

** Angabe der benötigten g der handelsüblichen Formulierung pro l Vasenwasser

Beispiel 5

Vergleich mit Schnittblumenfrischhaltemittel des Handels.

Zur Versuchdurchführung, Versuchsanordnung und zur Zusammensetzung siehe Beispiel 1.

Die Ergebnisse gehen aus der nachfolgenden Tabelle hervor:

Tabelle 5: Schnittblumenart: Gabera, Sorte «Yamee»

| Mikrobizid (Wirkstoff) im Basis-BFH | Dosis in mg/l Vasenwaser | Gemittelte Haltbarkeit in Tagen | Vergleichs-wert | Bemerkungen |
|---|---|---|---|---|
| Nur Leitungswasser | – | 8,0 | – | Lösung sehr trüb durch Mikroorganismen |
| (R) «Chrysal» (bekannt)* | [12,5 g]* | 11,7 | 100 | Lösung klar |
| (3) (erfindungsgemäss) | 2,5 | 12,5 | 107 | Lösung etwas trüb |
| | 3,75 | 13,5 | 115 | Lösung klar |
| | 5,0 | 15,5 | 132 | Lösung klar |

* siehe hierzu die Angaben zu Beispiel 4

**Patentansprüche**

1. Mittel zum Frischhalten von Schnittblumen und anderen abgeschnittenen Pflanzenteilen, gekennzeichnet durch einen Gehalt an mindestens einer N-(Trifluormethyl)-N-(dichlorfluormethylsulfenyl)-aminobenzoesäure oder mindestens einem von deren Salzen der allgemeinen Formel

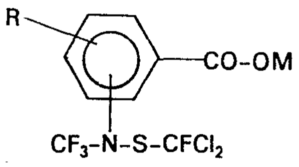

(I)

in welcher
M für Wasserstoff oder 1 Äquivalent eines Alkali- oder Erdalkalimetallatomes steht,
und
R für Wasserstoff, Methyl, Methoxy, Trifluormethyl, Chlor oder Nitro steht,
oder mindestens einem von deren Salzen.

2. Verfahren zur Konservierung von Schnittblumen und anderen abgeschnittenen Pflanzenteilen, dadurch gekennzeichnet, dass man dem Wasser, in dem die Blumen bzw. Pflanzen stehen, eine N-(Trifluormethyl)-N-(dichlorfluormethylsulfenyl)-aminobenzoesäure gemäss Anspruch 1 zusetzt.

3. Verwendung von N-(Trifluormethyl)-N-(dichlorfluormethylsulfenyl)-aminobenzoesäure gemäss Anspruch 1 zum Frischhalten von Schnittblumen und anderen abgeschnittenen Pflanzenteilen.

4. Verfahren zur Herstellung von Mitteln zum Frischhalten von Schnittblumen und anderen abgeschnittenen Pflanzenteilen, dadurch gekennzeichnet, dass man N-(Trifluormethyl)-N-(dichlorfluormethylsulfenyl)-aminobenzoesäure gemäss Anspruch 1 mit Streckmitteln vermischt.

**Patent Claims**

1. Agents for preserving cut flowers and other parts of plants which have been cut off, characterised in that they contain at least one N-(trifluoromethyl)-N-(dichlorofluoromethylsulfphenyl)-aminobenzoic acid or at least one of the salts thereof, of the general formula

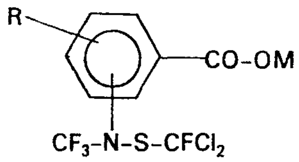

(I)

in which
M represents hydrogen or 1 equivalent of an alkali metal atom or alkaline earth metal atom
and
R represents hydrogen, methyl, methoxy, trifluoromethyl, chlorine or nitro.

2. Process for preserving cut flowers and other parts of plants which have been cut off, characterised in that a N-(trifluoromethyl)-N-(dichlorofluoromethylsulphenyl)-aminobenzoic acid according to Claim 1 is added to the water in which the flowers or plants are standing.

3. Use of N-(trifluoromethyl)-N-(dichlorofluoromethylsulphenyl)-aminobenzoic acid according to Claim 1 for preserving cut flowers and other parts of plants which have been cut off.

4. Process for the preparation of agents for preserving cut flowers and other parts of plants which have been cut off, chacterised in that N-(trifluoromethyl)-N-(dichlorofluoromethylsulphenyl)-aminobenzoic acid according to Claim 1 is mixed with extenders.

**Revendications**

1. Agents pour le maintien de la fraîcheur des fleurs coupées et autres parties de plantes coupées caractérisés par une teneur en au moins un acide N-(trifluorométhyl)-N-(dichlorofluorométhylsulfényl)-aminobenzoïque ou au moins un de leurs sels de formule générale:

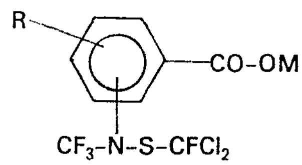

(I)

dans laquelle
M représente de l'hydrogène ou 1 équivalent d'un atome de métal alcalin ou alcalino-terreux
et
R représente de l'hydrogène, méthyle, méthoxy, trifluorométhyle, chlore ou nitro,
ou au moins un de leurs sels.

2. Procédé de conservation de fleurs coupées et autres parties de plantes découpées, caractérisé en ce qu'on ajoute à l'eau dans laquelle les fleurs ou les plantes se trouvent un acide N-(trifluorométhyl)-N-(dichlorofluorométhylsulfényl)-aminobenzoïque selon la revendication 1.

3. Utilisation d'acide N-(trifluorométhyl)-N-(dichlorofluorométhylsulfényl)-amino-benzoïque selon la revendication 1 pour le maintien de la fraîcheur des fleurs coupées et autres parties de plantes découpées.

4. Procédé de fabrication d'agents pour le maintien de la fraîcheur des fleurs coupées et autres parties de plantes découpées, caractérisé en ce qu'on mélange de l'acide N-(trifluorométhyl)-N-(dichlorofluorométhylsulfényl)-aminobenzoïque selon la revendication 1 avec des diluants.